Europäisches Patentamt

European Patent Office

Office européen des brevets

(19)

(11) **EP 0 607 079 B1**

(12) **FASCICULE DE BREVET EUROPEEN**

(45) Date de publication et mention
de la délivrance du brevet:
**24.07.1996 Bulletin 1996/30**

(51) Int Cl.6: **H01B 12/08**, H01B 12/10

(21) Numéro de dépôt: **94400060.3**

(22) Date de dépôt: **11.01.1994**

(54) **Conducteur électrique pour régime variable**

Elektrischer Leiter für variablen Strom

Variable current electrical conductor

(84) Etats contractants désignés:
**AT CH DE ES FR GB IT LI NL SE**

(30) Priorité: **14.01.1993 FR 9300293**

(43) Date de publication de la demande:
**20.07.1994 Bulletin 1994/29**

(73) Titulaire: **GEC ALSTHOM ELECTROMECANIQUE SA**
**75016 Paris (FR)**

(72) Inventeurs:
• **Verhaege, Thierry**
**F-91160 Saulx les Chartreux (FR)**
• **Estop, Pascal**
**F-94400 Vitry sur Seine (FR)**
• **Lacaze, Alain**
**F-90850 Essert (FR)**

(74) Mandataire: **Fournier, Michel**
**SOSPI**
**14-16, rue de la Baume**
**F-75008 Paris (FR)**

(56) Documents cités:
**EP-A- 0 390 018**          **GB-A- 2 007 120**

**Description**

La présente invention est relative à un conducteur électrique destiné à fonctionner en courant alternatif et plus généralement en régime de courant variable. L'invention concerne aussi bien les conducteurs classiques que les conducteurs supraconducteurs, et l'invention trouve des applications en électrotechnique, en particulier pour la réalisation de transformateurs et inductances de puissance, alimentations à découpage, onduleurs, limiteurs de courant supraconducteurs, etc.., cette liste n'étant nullement exhaustive.

On sait que le passage du courant alternatif dans un conducteur classique donne naissance à un "effet de peau", appelé aussi "effet KELVIN", et en raison duquel le courant ne circule qu'à la périphérie du conducteur; pour les conducteurs supraconducteurs, un effet existe, conduisant alors à la saturation des couches extérieures du brin. Pour la commodité de l'exposé qui va suivre, on utilisera le terme d'effet de peau aussi bien pour les conducteurs classiques que pour les conducteurs supraconducteurs, bien que, pour ces derniers, le terme soit impropre.

Le phénomène d'effet de peau accroît les pertes dans les conducteurs et compromet le stabilité des conducteurs supraconducteurs.

Pour réduire les conséquences de l'effet de peau, il est bien connu de réaliser le conducteur au moyen de plusieurs brins "transposés", c'est-à-dire placés les uns par rapport aux autres de manière à être dans des conditions électromagnétiques identiques ou au moins les plus voisines possible. Le brin étant lui-même soumis à l'effet de peau, on s'efforce d'en réduire le diamètre. Cette voie a des limites technologiques et économiques, liées aux difficultés et au coût de réalisation de brins extrêmement fins.

A titre d'exemple, le fil de Litz, utilisé en technologie classique (non supraconductrice), est constitué d'un très grand nombre (jusqu'à plusieurs milliers) de brins de cuivre émaillé d'environ 50 micromètres de diamètre; en technique supraconductrice, on utilise un brin constitué de plusieurs centaines milliers de filaments de niobium-titane noyés dans une matrice de cupro-nickel; le brin est torsadé, puis, à l'aide de plusieurs brins identiques (par exemple 3 ou 6), on réalise par toronnage un sous-conducteur de premier étage; à l'aide de plusieurs sous-conducteurs de premier étage, on réalise par toronnage un sous-conducteur de second étage; et, on poursuit ces opération jusqu'à l'obtention du conducteur définitif. On pourra se référer, pour illustrer cette technique, à l'article "Instabilities in multi-strand AC superconducting cables caused by longitudinal magnetic field with transverse magnetic field", par N. AMEMIYA et al., Proc. of ASC 92, Chicago, 1992.

Par analogie avec la technique des supraconducteurs, il a été proposé, notamment dans le brevet français n° 91 12471, de réaliser un conducteur classique au moyen de brins torsadés comprenant chacun 421 filaments de cuivre dans une matrice de Cu.30%Ni. Cette disposition permet de réduire les pertes par courant de Foucault, en présence de champ magnétique variable; cependant, elle ne permet pas à elle seule d'éviter l'effet de peau, car le torsadage n'évite pas une distibution en couches concentriques des filaments à l'intérieur du brin.

Un but de la présente invention est de réaliser un conducteur, par assemblages successifs de plusieurs sous-conducteurs d'étages croissants, qui soit quasiment insensible à l'effet de peau.

Un autre but de l'invention est de réaliser un conducteur du type précité dans lequel les brins ont des diamètres supérieurs à ceux utilisés dans la technique actuelle, ce qui rend ce conducteur plus économique à réaliser.

Un autre but de l'invention est de réaliser un conducteur du type précité qui, à égalité de diamètre de brin par rapport à un conducteur de l'art antérieur, a des pertes plus réduites et peut être utilisé à des fréquences supérieures à celles utilisées dans l'art antérieur.

L'invention a pour objet un conducteur électrique du type constitué par l'assemblage de brins conducteurs élémentaires constitués chacun de filaments de matériau faiblement résistif ou supraconducteur noyés dans une matrice de matériau fortement résistif, l'assemblage étant constitué de n étages de sous-conducteurs, un sous-conducteur d'étage j comprenant $n_j$ sous-conducteurs transposés d'étage j-1, un conducteur d'étage j comprenant ainsi un nombre $N_j = n_1.n_2. ...n_j$ brins, caractérisé en ce que la relation suivante est vérifiée:

$$\sum_{j=1}^{n} \frac{\varepsilon_j}{l_j}\left(N_j - N_{j-1}\right) + \frac{1}{2 p_0} = \lambda . \frac{p_0}{4 \pi S},$$

dans laquelle:

$\varepsilon_j$ est égal à +1 lorsque le sens de transposition du sous-conducteur j est le même que le sens de torsadage des brins élémentaires, et égal à -1 dans le cas contraire,
$p_0$ est le pas de torsadage du brin élémentaire,
$l_j$ est la longueur développée d'un élément de sous-conducteur d'étage j sur un pas de transposition,
S est la section droite de la zone filamentaire du brin élémentaire,
$\lambda$ est un facteur compris entre 0,8 et 1,2.

L'invention est expliquée en détail par la description d'un exemple de réalisation de l'invention, en référence au dessin annexé dans lequel:

- la figure 1 est une vue en perspective d'un conducteur et des sous-conducteurs qui le constituent,
- la figure 2 est un schéma expliquent la composition des champs magnétiques à l'intérieur d'un brin élémentaire,
- la figure 3 est une vue en perspective d'une barre de Roebel réalisée selon l'invention.

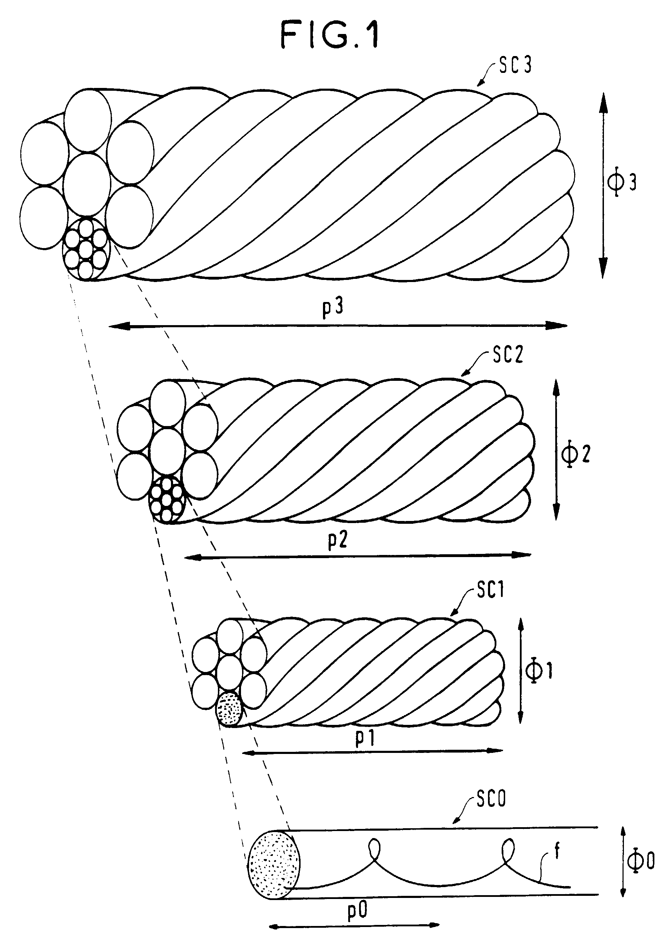

La figure 1 explicite, sur un exemple de mise en oeuvre de l'invention, la structure d'un conducteur comprenent 3 étages de torons;

Le brin élémentaire SC0, ou étage 0, comprend une pluralité de filaments f, par exemple 421 filaments de cuivre noyés dans une matrice de cupro-nickel étirée de manière à donner au brin un diamètre $\Phi o = 0,2$ mm; le brin est torsadé et le pas po de torsadage est po = 2,2 mm. Par pas de torsadage, on entend la distance entre deux points le long du brin, pour lesquels un filament retrouve la même configuration géographique, et par suite est soumis au même champ magnétique;

Le sous-conducteur SC1 d'étage 1 comporte N1 = 6 brins d'étage 0, transposés dans le même sens que le brin d'étage 0, soit $\varepsilon 1 = +1$, avec un pas de transposition p1 = 6 mm. Par pas de transposition, on entend ici la longueur comptée le long du sous-conducteur, pour lesquels un brin retrouve la même configuration géographique.

Le sous-conducteur SC2 d'étage 2 comprend également 6 sous-conducteurs d'étage 1, (soit N1 = 36 brins d'étage 0), torsadés dans le même sens ($\varepsilon 2 = +1$), et avec un pas de transposition p2 = 18 mm. Ici, le pas de transposition est la longueur comptée entre deux point du sous-conducteur d'étage 2, pour lesquels un sous-conducteur d'étage qui le constitue retrouve la même configuration géographique.

Le conducteur définitif SC3 comprend 6 sous-conducteurs d'étage 2, (soit N3 = 216 brins élémentaires), transposés dans le même sens que le brin d'étage 0 ($\varepsilon 3 = +1$), avec un pas de transposition p3 = 54 mm.

Les longueurs développées lj d'un pas de torsadage ou de transposition peuvent être établies comme suit:

si $\Phi_0$ est le diamètre du brin élémentaire et $\Phi_k$ le diamètre du sous-conducteur d'étage k, l'angle d'assemblage $\phi_k$ du sous-conducteur d'étage k est défini par la relation:

$$\phi_k = \text{Arctg}\left( \pi \frac{(\Phi_k - \Phi_{k-1})}{p_k} \right)$$

lj est alors calculé par la relation:

$$l_j = \frac{p_j}{\prod_{k=1}^{j} \cos \phi_k}$$

Dans l'exemple donné, on obtient:

$\Phi_1 = 0,6$ mm; $\phi_1 = 11,83°$; $l_1 = 6,13$ mm
$\Phi_2 = 1,8$ mm; $\phi_2 = 11,83°$; $l_2 = 18,8$ mm
$\Phi_3 = 5,4$ mm; $\phi_3 = 11,83°$; $l_3 = 57,6$ mm

Le conducteur considéré vérifie la relation proposée selon l'invention avec $\lambda = 1,03$.

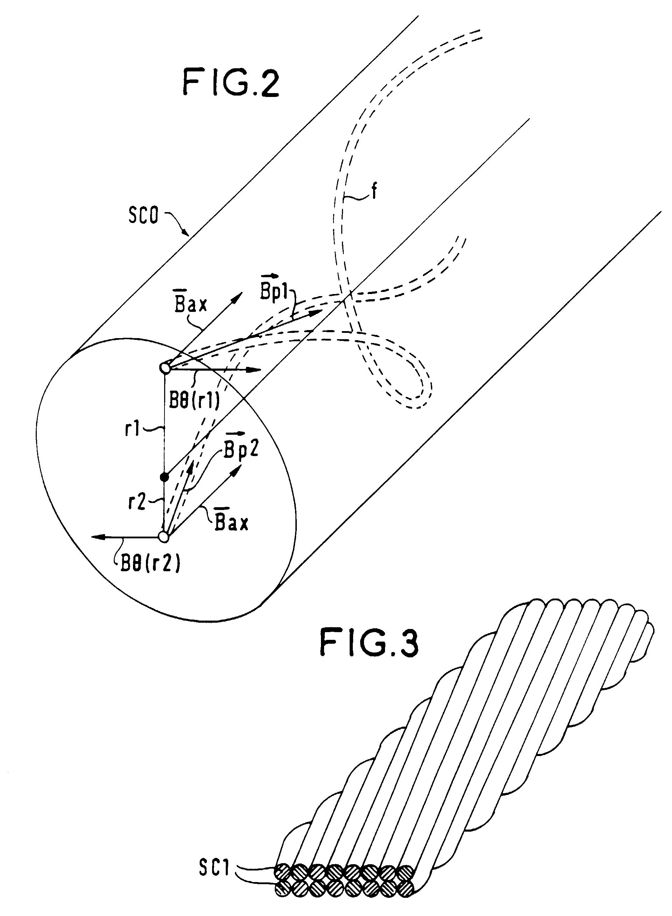

On se reportera à la figure 2.

Les mesures constructives de l'invention, telles que définies par la relation proposée, ont pour but d'obtenir que le vecteur du champ magnétique propre $\vec{B}_p$ soit approximativement parallèle aux filaments f, ce qui conduit à une distribution approximativement homogène du courant dans la zone filamentaire du brin SC0. On désignera par j la densité de courant égale à i/S, i représentant le courant par brin et S la section de la zone filamentaire du brin.

Pour obtenir le résultat souhaité avec une bonne approximation, il est avantageux que la zone filamentaire du brin s'étende uniformément dans l'espace compris entre un rayon intérieur $r_i$ aussi petit que possible (en tous cas inférieur au 1/5 du rayon du brin) et un rayon extérieur $r_e$ donné. On admettra ici $r_i = 0$, $S = \pi.r_e^2$, $j = i/\pi.r_e^2$.

La figure 2 illustre la carte de champ magnétique propre au brin.

La composante azimutale $B_\theta$ de champ propre s'écrit:

$B_\theta (r) = \mu_o.j.r/2$, dans laquelle $\mu_o$ est la perméabilité magnétique du vide; cette composante $B_\theta$ croît donc linéairement avec le rayon. La composante axiale $\overline{B}_{ax}$ est principalement due aux autres brins du conducteur et varie relativement peu avec r; elle varie par contre beaucoup le long de l'axe du brin, selon que le secteur considéré se situe près du centre ou de la périphérie du conducteur. Cependant, et à condition que la matrice soit suffisamment résistive, la distribution de courant est définie par les conditions moyennes plutôt que par les conditions locales. On considérera donc ici la composante du champ axial par sa valeur moyenne $\bar{B}_{ax}$, identique pour tous les brins transposés. Les filaments situés sur une couronne de rayon r font par rapport à l'axe du brin un angle $\alpha(r)$ tel que

$$tg\ \alpha(r) = 2\ \pi\ r/p_0.$$

Si la définition géométrique du conducteur est telle

que le coefficient de couplage $k = \dfrac{\bar{B}_{ax}}{j}$ soit précisément égal à $\dfrac{\mu_0 p_0}{4\ \pi}$ alors on obtient: $\dfrac{B_{\theta(r)}}{B_{ax}} = \dfrac{2\pi r}{p_0}$

$= tg\alpha(r)$ pour tout r, ce qui signifie que le champ propre $\vec{B}_p$ est parallèle aux filaments pour toutes valeurs de r, de l'angle $\theta$, du courant i et de la fréquence f. Ces résultats valident a posteriori l'hypothèse d'une densité de courant j indépendante du rayon r.

Ce résultat s'étend au cas où le conducteur est de plus soumis à un champ extérieur transverse, car le torsadage transpose les filaments vis-à-vis de ce champ; par contre, le conducteur est sensible, comme tout produit torsadé, à une éventuelle composante axiale du champ extérieur.

Le coefficient de couplage $k = \dfrac{\bar{B}_{ax}}{j}$ est donc déterminant pour les performances du conducteur et sa valeur optimale

$k_{opt}$ selon l'invention doit être voisine de $\dfrac{\mu_0 p_0}{4\pi}$ . Les variations de performance avec k sont les suivantes:

pour k < 0 : l'effet de peau sur le brin est accentué,
pour k = 0 : l'effet de peau est comparable à celui du conducteur monobrin,
pour $0 < k < k_{opt}$ : l'effet de peau est réduit
pour $k = k_{opt}$ : l'effet de peau disparaît, dans la limite des diverses approximations effectuées,
pour $k > k_{opt}$: l'effet de peau est inversé, c'est-à-dire que le courant passe principalement dans les couches internes de filaments, ceci d'autant plus que la différence $k - k_{opt}$ est grande.

Le coefficient de couplage dépend des sens et des pas de torsadage et de transposition des différents étages du conducteur. Son calcul rigoureux est complexe mais possible. Il coïncide à quelques % près avec la formule approchée proposée par l'invention, soit :

$$\frac{k}{\mu_0} = \sum_{j=1}^{n} \frac{\varepsilon_j}{l_j}\left[ N_j - N_{j-1} \right] + \frac{1}{2\ p_0}$$

La définition du conducteur selon l'invention correspond ainsi approximativement à $0,8 k_{opt} < k < 1,2 k_{opt}$, conditions dans lesquelles les performances aux fréquences élevées du brin multifilamentaire au sein du conducteur sont bien supérieures à celles du brin multifilamentaire seul ou d'un brin massif de même section.

L'étendue de la plage de tolérance $0,8 < \lambda < 1,2$ est liée au fait que l'obtention du résultat k = kopt peut présenter un certain nombre de difficultés pratiques.

L'invention peut s'appliquer à la réalisation d'un conducteur supraconducteur. Les filaments seront alors réalisés en niobium-titane et noyés dans une matrice de cupro-nickel.

L'invention peut s'appliquer, en utilisant un sous-conducteur d'étage au moins égal à 1, à la réalisation d'une barre de type Roebel, telle que celle représentée dans la figure 3, où la référence SC1 désigne un sous-conducteur d'étage 1.

**Revendications**

1. Conducteur électrique du type constitué par l'assemblage de brins conducteurs élémentaires constitués chacun de filaments de matériau faiblement résistif ou supraconducteur noyés dans une matrice de matériau fortement résistif, l'assemblage étant constitué de n étages de sous-conducteurs (SC1, SC2, SC3), un sous-conducteur d'étage j comprenant $n_j$ sous-conducteurs transposés d'étage j-1, un conducteur d'étage comprenant ainsi un nombre $N_j = n1.n2. ...nj$ brins, caractérisé en ce que la relation suivante est vérifiée:

$$\sum_{j=1}^{n} \frac{\varepsilon_j}{l_j}\left( N_j - N_{j-1} \right) + \frac{1}{2\ p_0} = \lambda.\frac{p_0}{4\ \pi S},$$

dans laquelle:

εj est égal à +1 lorsque le sens de transposition du sous-conducteur j est le même que le sens de torsadage des brins élémentaires, et égal à -1 dans le cas contraire,

p0 est le pas de torsadage du brin élémentaire,

lj est la longueur développée d'un élément de sous-conducteur d'étage j sur un pas de transposition,

S est la section droite de la zone filamentaire du brin élémentaire,

$\lambda$ est un facteur compris entre 0,8 et 1,2.

2. Conducteur selon la revendication 1, caractérisé en ce que la zone filamentaire d'un brin est une couronne uniforme comprise entre un rayon intérieur inférieur au 1/5 du rayon du brin et un rayon extérieur donné.

3. Conducteur selon l'une des revendications 1 et 2, caractérisé en que l'assemblage des sous-conducteurs est réalisé par toronnage.

4. Conducteur selon l'une des revendications 1 et 2, caractérisé en ce que l'assemblage est du type Roebel.

5. Conducteur selon l'une des revendications 1 à 4, caractérisé en ce que les filaments sont en cuivre et la matrice en cupro-nickel.

6. Conducteur selon l'une des revendications 1 à 4, caractérisé en ce que les filaments sont en niobium-titane et la matrice en cupro-nickel.


**Patentansprüche**

1. Elektrischer Leiter, der durch Zusammenfügung von elementaren leitenden Adern gebildet wird, die ihrerseits je aus Fäden aus gut leitendem oder supraleitendem Material gebildet werden, welche in eine Matrix aus einem Material mit hohem elektrischem Widerstand eingebettet sind, wobei der Zusammenbau aus n Stufen von Unter-Leitern (SC1, SC2, SC3) gebildet wird, ein Unter-Leiter der Stufe j aus $n_j$ umgesetzten Unter-Leitern der Stufe j-1 besteht und ein Leiter einer Stufe j so eine Anzahl $N_j = n1 \cdot n2 \cdot \ldots nj$ Adern besitzt, dadurch gekennzeichnet, daß die folgende Gleichung befriedigt ist:

$$\sum_{j=1}^{n} \frac{\varepsilon_j}{l_j} \left( N_j - N_{j-1} \right) + \frac{1}{2 p_0} = \lambda . \frac{p_0}{4 \pi S},$$

wobei gilt:

εj ist gleich +1, wenn die Umsetzungsrichtung des Unter-Leiters j die gleiche wie die Verseilungsrichtung der Elementaradern ist, sowie -1 im gegenteiligen Fall,

$p_0$ ist die Verseilsteigung der Elementarader,

$l_j$ ist die abgewickelte Länge eines Unter-Leiters der Stufe j über einen Umsetzungsschritt,

S ist der Querschnitt der Fadenzone der Elementarader,

$\lambda$ ist ein Faktor zwischen 0,8 und 1,2.

2. Leiter nach Anspruch 1, dadurch gekennzeichnet, daß die Fadenzone einer Ader ein gleichförmiger Kranz ist, der zwischen einem inneren Radius, der weniger als 1/5 des Radius der Ader beträgt, und einem gegebenen äußeren Radius liegt.

3. Leiter nach einem der Ansprüche 1 und 2, dadurch gekennzeichnet, daß die Zusammenfügung der Unter-Leiter durch Verseilung erfolgt.

4. Leiter nach einem der Ansprüche 1 und 2, dadurch gekennzeichnet, daß die Zusammenfügung einen Roebel-Stab ergibt.

5. Leiter nach einem der Ansprüche 1 bis 4, dadurch gekennzeichnet, daß die Fäden aus Kupfer sind und die Matrix aus Kupfer-Nickel ist.

6. Leiter nach einem der Ansprüche 1 bis 4, dadurch gekennzeichnet, daß die Fäden aus Niob-Titan sind und die Matrix aus Kupfer-Nickel ist.

## Claims

1. An electrical conductor of the type constituted by an assembly of elementary conductor strands each constituted by filaments of superconducting or low resistivity material embedded in a matrix of high resistivity material. the assembly being built up of $\underline{n}$ stages of subconductors (SC1, SC2, SC3), a subconductor of stage j comprising $n_j$ transposed subconductors of stage j-1, a stage subconductor thus comprising $N_j = n_1.n_2. ....n_j$ strands, the conductor being characterized in that the following relationship is satisfied:

$$\sum_{j=1}^{n} \frac{\varepsilon_j}{l_j} [N_j - N_{j-1}] + \frac{1}{2p_0} = \lambda \frac{p_0}{4\pi S}$$

in which:

$\varepsilon_j$ is equal to +1 when the transposition direction of subconductor j is the same as the twisting direction of the elementary strands, and equal to -1 otherwise;
$p_0$ is the twisting pitch of the elementary strand;
$l_j$ is the developed length of a subconductor element of stage j along one transposition pitch;
S is the right cross-section of the zone of the elementary strand that has filaments; and
$\lambda$ is a factor lying in the range 0.8 to 1.2.

2. A conductor according to claim 1, characterized in that the zone of the strand that includes filaments is a uniform ring lying between an inner radius of less than 1/5th the radius of the strand and a given outer radius.

3. A conductor according to claim 1 or 2, characterized in that the subconductors are assembled together by being twisted together.

4. A conductor according to claim 1 or 2, characterized in that the assembly is constituted by a transposed conductor.

5. A conductor according to any one of claims 1 to 4, characterized in that the filaments are made of copper and the matrix is made of cupro-nickel.

6. A conductor according to any one of claims 1 to 4, characterized in that the filaments are made of niobium-titanium and the matrix is made of cupro-nickel.

# FIG.1

FIG.2

FIG.3